Europäisches Patentamt

**European Patent Office**

Office européen des brevets

(19)

(11) Publication number: **0 024 969**

**A1**

(12)

# EUROPEAN PATENT APPLICATION

(21) Application number: **80401146.8**

(22) Date of filing: **01.08.80**

(51) Int. Cl.³: **G 01 P 13/04**
**G 01 D 5/245, G 01 D 5/36**

(30) Priority: **31.08.79 US 71625**

(43) Date of publication of application:
**11.03.81 Bulletin 81/10**

(84) Designated Contracting States:
**DE FR GB IT SE**

(71) Applicant: **THE BENDIX CORPORATION**
**Executive Offices Bendix Center**
**Southfield, Michigan 48037(US)**

(72) Inventor: **Tumbush, Gerald Lawrence**
**1867 Hickory Ridge Drive**
**Dayton Ohio 45432(US)**

(74) Representative: **Maguet, André et al,**
**Service Brevets Bendix 44, Rue François 1er**
**F-75008 Paris(FR)**

(54) Measuring machine and method of producing displacement-indicative signals in such a machine.

(57) Measuring machine and method of producing displacement-indicative pulses in such a machine in which a measuring increment is divided into smaller units for better resolution and accuracy; the increased measurement resolution is accomplished by detecting a Moire fringe pattern at two locations, generating at least two square waves representative of the measurement, assigning a digital value to the square waves at two different times, and using the digital values of the square waves at the two times as a ROM address for look-up; the ROM has values (markers) stored as an indication of whether the measurement should be incremented and by how much ( + 1 or -1 in one embodiment); and the square waves are pulse patterns which are offset (i.e., change state at different points), using the digital values from a present state and previous state to provide a ROM address representative of whether a pulse should be created indicating a relative movement and if so providing an indication of which direction in which the apparatus is moving.

FIG.2

Measuring machine and method of producing
displacement-indicative signals in such a machine

This invention relates to a method of producing displacement-indicative signals in a measuring machine and to such a machine of the type comprising: a base including a fixed grating; a movable member coupled to a movable grating positioned adjacent to the fixed grating; and at least first and second photodetectors, each positioned adjacent to the gratings for sensing relative movement of the gratings and each producing a signal indicative of a displacement of a predetermined magnitude of the movable grating.

Measuring and layout machines typically have measuring systems which provide an indication of a displacement or measurement increment on a relatively gross scale (perhaps hundredths of a millimeter). These systems may create the measurement increment through the use of "Moire-fringe" gratings having five to fifty lines per millimeter in the case of a measuring machine. In layout machines, a rotary encoder is frequently provided having a pulse producing member in response to rotation.

It is frequently desirable in such machines to provide an indication of the measurement to a greater accuracy (perhaps ten hundredths of a millimeter or less in measuring machines) than the measurement increment. In such machines, it is necessary to accurately divide the measurement increments up into smaller portions. It is also desirable to provide an indication of the direction in which the machine is moving, that is, to indicate whether the displacement is in a positive or negative direction and thereby indicate whether the measurement is increasing or decreasing.

There are several known ways to provide a division of the measurement increment. In Moire fringe systems, these typically use at least two laterally spaced detectors, a plurality of buffers, a resistive divider network and a plurality of logic elements, interconnected in an intricate and complicated way which is difficult to design and build. Frequently, a large number of latch (buffer) elements are also necessary. A large number of logic and other circuit elements require a significant number of integrated circuit elements and require a significant amount of design layout and manufacturing time. These entail significant costs.

The prior art designs are also very complex. Furthermore, the large number of parts and wiring provides many possible locations for faults, making it difficult to inspect or troubleshoot the assembly.

The present invention overcomes the limitations and disadvantages of the prior art systems by providing a measuring machine comprising: a base including a fixed grating; a movable member coupled to a movable grating positioned adjacent to the fixed grating; at least first and second photodetectors, each positioned adjacent to the gratings for sensing relative movement of the gratings and each producing a signal indicative of a displacement of a predetermined magnitude of the movable member; and means adapted to divide said predetermined magnitude into smaller regions and to produce signals for counting such regions, said means comprising: a memory including a stored value at each of a plurality of digital addresses; a logic coupled to the first and second photodetectors and to the memory for generating a binary word based upon present and past conditions of the first and second photodetectors; and means coupled to the memory for obtaining a signal based upon a stored value in the memory at an address corresponding to the binary word generated by the logic, said signal being indicative of movement through a predetermined smaller region.

The present invention has the advantage that substantially all of the buffers and latches associated with prior circuits can be eliminated. Also, a substantial portion of the logic and interconnecting elements necessary in other designs can be eliminated.

The present invention also has the advantage that conversion of input signals to output is provided by a reliable hard wire element such as a ROM (Read Only Memory) in which the representations of the present and past states of the photodetectors have been stored to provide an indication of whether an up or down counter should be incremented respectively.

Furthermore, the machine according to the present invention is relatively simple to design, easy to troubleshoot and inexpensive to manufacture.

The manner of carrying out the invention is described in detail below with reference to the drawings which illustrate several embodiments of this invention, in which:

FIGURE 1 is a perspective view of a portion of a measuring machine used both in the prior art and present invention;

FIGURE 2 is a block diagram of the present invention used to create measurement pulses;

FIGURE 3 is a view of a wave pattern generated by the photodetectors of FIGURE 1, after signal conditioning converting offset sine waves to offset square waves;

FIGURE 4 shows a simple divide-by-four circuit using the apparatus of FIGURES 1-3;

FIGURE 5 shows a ROM storage system including the address and stored values for each state, used with the systems of FIGURES 3 and 4;

FIGURE 6 is a divide-by-10 wave form / and binary <sub>system</sub> code assignments for an alternate embodiment;

FIGURE 7 is a ROM storage technique for use with the divide-by-10 wave form/ of FIGURE 6; <sub>system</sub>

FIGURE 8 is a divide-by-20 wave form  system;

FIGURE 9 is a ROM storage system for the divide-by-twenty system of FIGURE 8; and

FIGURE 10 is a hardware implementation of the decoding of the FIGURE 9 system.

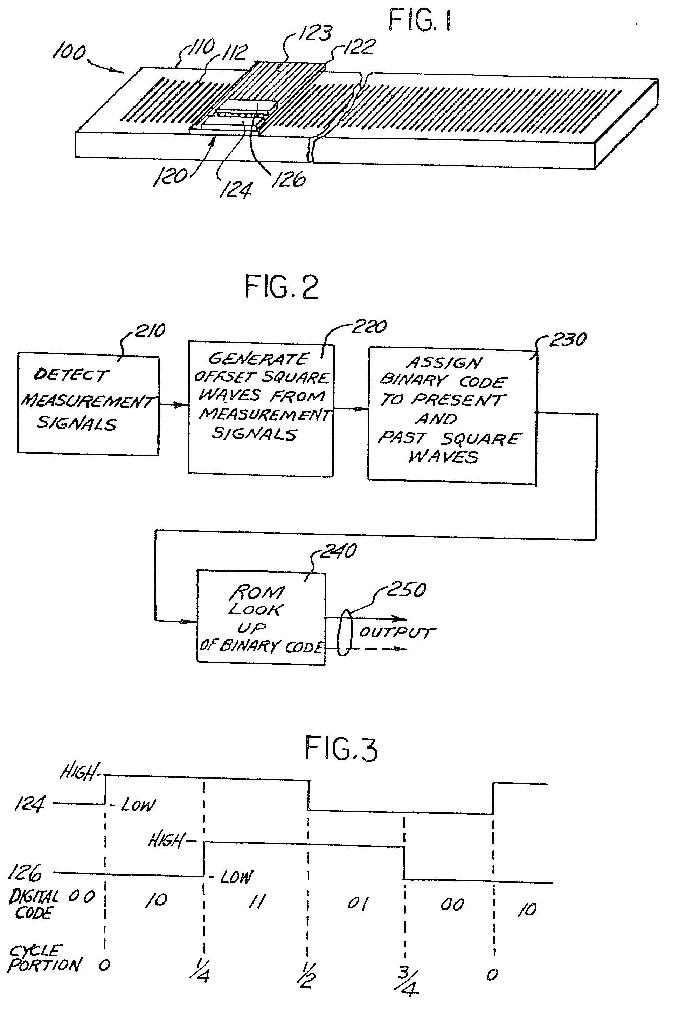

FIGURE 1 is an enlarged schematic  of a Moire fringe system 100 suitable for generating measurement pulses used in the present invention, especially in a coordinate measuring machine. This system 100 is also characteristic of other prior art systems to the extent disclosed in this Figure.

The Moire fringe system 100 includes a first, long stationary grating 110, and a movable transducer 120. The transducer 120 carries a second movable grating 122 and a plurality of photodetectors 124,126. This transducer 120 also carries a lens and a light source (not shown) and is more specifically described in U.S. Patent 3,713,139.

The first grating 110 includes a plurality of parallel lines 112 which are precisely positioned to be a fixed distance from the next line and parallel thereto. This grating is fixed to a frame of a measuring machine.

The transducer 120 is mounted to a measuring probe to movably displace together with the probe. The transducer 120 includes the grating 122 having parallel lines 123 on a transparent piece. These lines 123 are also equidistant one to the next.

The photodetectors 124,126 are spaced laterally (perpendicular to the motion of the transducer) from each other by one quarter cycle of the periodic optical pattern to create a 90 degree offset of an observed sinusoidal (or converted square wave) pulse pattern between the photodetector outputs. Additional photodetectors could also be used, each spaced an additional one-quarter cycle offset from the adjacent photodetectors.

In a layout machine, the measurement source is frequently provided by a rotary encoder. The encoder includes a fixed rack and a movable pinion which rotates in response to linear displacement. In such systems, the encoder provides square waves directly, and the two desired square waves may be chosen to be 90 degrees apart on the pinion rotation.

FIGURE 2 is a block diagram representation of the present invention in connection with a measuring machine.

At block 210, the Moire fringe pattern is detected, as by the transducer 120 in FIGURE 1. The Moire fringe pattern is initially a sine wave.

Offset sine waves created by the photodetectors are converted to square waves at block 220 through a conventional resistor network arrangement in a known manner. While the simple expedient of placing the photodetectors at a lateral offset distance of one quarter of the optical pattern will create a 90 degree offset in the waves created, other methods could be used to create waves having a different offset (i.e., a resistive network could be used with the offset photodetectors to create a plurality of square waves offset by any desired amount one to another). Such resistive networks are well known in the prior art and are not discussed in detail here for that reason.

After offset square waves have been generated, they are analyzed and a binary code is assigned to each of the possible states at block 230. The binary code from block 230(present and past) is used as an address in block 240 to look up values stored in a ROM (Read Only Memory) at that address. Output lines, shown generally by reference numeral 250, transmit stored values from the ROM to indicate whether the counter should be incremented or decremented. The output is from stored values in the ROM at the address from the binary code generated in the block 230.

Thus, a ROM stored value (the output on lines 250) indicates, based upon the photodetectors present and past states, whether the measurement should be changed and, if so, in which direction.

In a layout-type machine, the theory is similar except the rotary encoder provides offset square waves directly (without intermediate sine waves).

FIGURE 3 shows a pulse pattern from the apparatus of FIGURE 1 (after signal conditioning) and a digital code assigned to each combination of pulses.     Thus, when the pulses from photodetectors 124 and 126 are both low, a digital code of 00 is produced. When the pulse from photodetector 124 is high but the pulse from photodetector 126 is low, a digital code of 10 is assigned. When the pulse from photodetectors 124 and 126 are both high, a digital code of 11 is assigned. When the photodetector 124 is low and the photodetector 126 is high, a digital code of 01 is assigned.

In the example of FIGURE 3, the square wave outputs from photodetectors 124,126 are offset by a quarter of the optical pattern and each photodetector square wave has been adjusted to provide a high signal during one half of the cycle and a low signal during the other half of the cycle. Other positions and ratios between on time and off time could be used without departing significantly from the scope of the present invention.

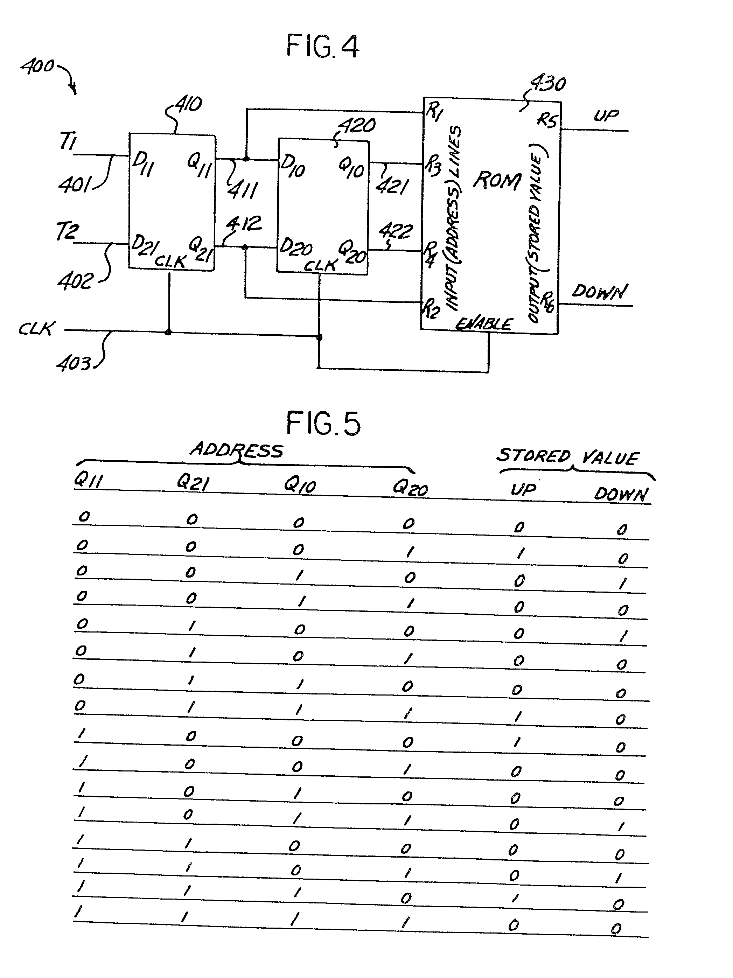

FIGURE 4 is a circuit diagram 400 of the present invention for a divide-by-four circuit of the type described in connection with FIGURES 1 through 3. The circuit 400 includes input lines 401 and 402 indicative of the converted square waves from photodetectors 124,126, respectively. The circuit 400 comprises as its major elements, a first dual D flip-flop 410, a second dual D flip-flop 420, and a ROM 430. A clock line 403 is operated at a rate higher than the transition rate of the square wave output to insure that at least one clock signal occurs during each state of the square waves. The clock signal on lines 403 is provided to each of the dual D flip-flops 410,420 and the ROM 430.

The first D flip-flop 410 has inputs 401,402 providing the inputs D11 and D21. Outputs Q11 and Q21 are the values D11 and D21, respectively, delayed by one clock value. The outputs Q11 and Q21 are provided on lines 411 and 412, which serve as the inputs to the second D flip-flop 420. The second flip-flop 420 has inputs D10 and D20 from the lines 411,412, respectively, and has outputs Q10 and Q20 on lines 421 and 422. By this arrangement, the outputs Q11 and Q21 are the values of the photodetector outputs T1 and T2, respectively, at one point in time, and the outputs Q10 and Q20 are the values of the photodetector outputs T1 and T2, respectively, at the preceding clock pulse.

The present invention uses a value of the photodetectors at one state in time and the immediate preceding value to create an address for a ROM look up. The ROM has preferably been stored with values as shown in FIGURE 5. Such a storage indicates whether the counter should be changed and, if so, in which direction (positive or negative). A pulse indicates whether the count should be incremented (an upward or ascending measurement value) or decremented ( downward or descending measurement value). The line R5 indicates an upward count or additional value and the line R6 indicates a downward count or decrement from the present measurement value. An accumulator of these count pulses would then provide a measurement of the movement of the grating, which in the case of conventional coordinate measuring machines, indicates a movement of the probe in the direction being measured.

The clock input of the D flip-flops 410,420 is used as an enable input of the ROM 430 to avoid errors caused by the flip-flops failing to simultaneously transfer information.

FIGURE 5 shows a typical storage chart for the ROM, by address and stored value. Thus, for the values where Q11 equals 0, Q21 equals 0, Q10 equals 0 and Q20 equals 1, the output would be a pulse on the up line and no pulse on the down line indicating that the grating has moved in direction of ascending measurement or value. This would cause an increment to the count measurement.

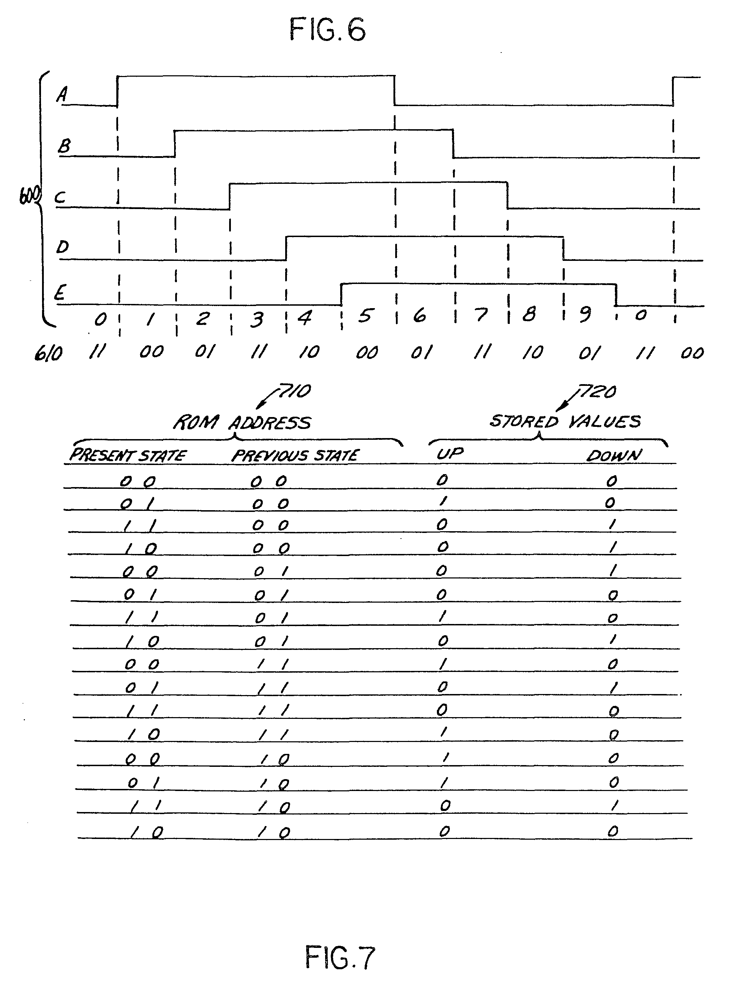

The present system has particular application for a divide-by-4 circuit for layout machines and the foregoing description of FIGURES 1-5 for that purpose is believed to be the preferred embodiment. Layout machines have generally a lesser requirement for accuracy and resolution than, for example, coordinate measuring machines. In such machines, it is desirable to measure at least ten times more accurately than the resolution of the machine on which the part is made. In such instances, it may be desirable to divide by ten or twenty parts to create a measurement system for a coordinate measuring machine. Accordingly, the description of FIGURES 6 through 10 addresses this situation with a circuit that is suitable for such measurements and uses a ROM look up system.

FIGURE 6 is a view of a divide-by-ten type of pulse trains 600 and a digital code 610 assigned to the pulse trains. The pulse trains 600 are offset square waves of a conventional type known in the art, generated from a sinusoidally-varying Moire fringe pattern by a pair of photodetectors and a resistive network.

FIGURE 7 illustrates a ROM storage technique including a plurality of ROM addresses 710 and a stored value 720 for each address. The ROM address 710 includes two bits representative of the present pulse train status and two bits representative of the pulse train status in the immediately preceding state. For each ROM address thus created, there are two stored values, one a marker or indicator for an "up" count, i.e., an increasing measurement direction, and the other a marker or indicator for a "down" count, i.e., a decrease in the measurement. While which direction is up or the measurement direction is arbitrarily chosen (perhaps to conform to conventional user position and orientation, e.g., to the user's right is in an increasing direction in an X direction or up is in an increasing direction in a Z direction), in connection with this dividing scheme, only consistency in direction is important.

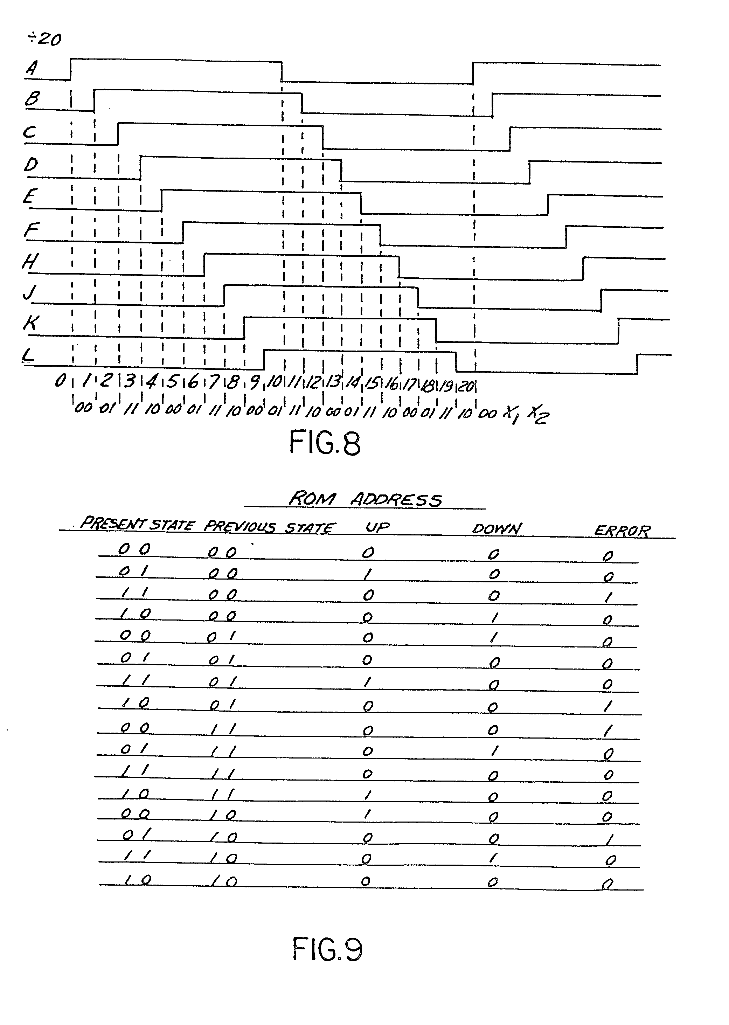

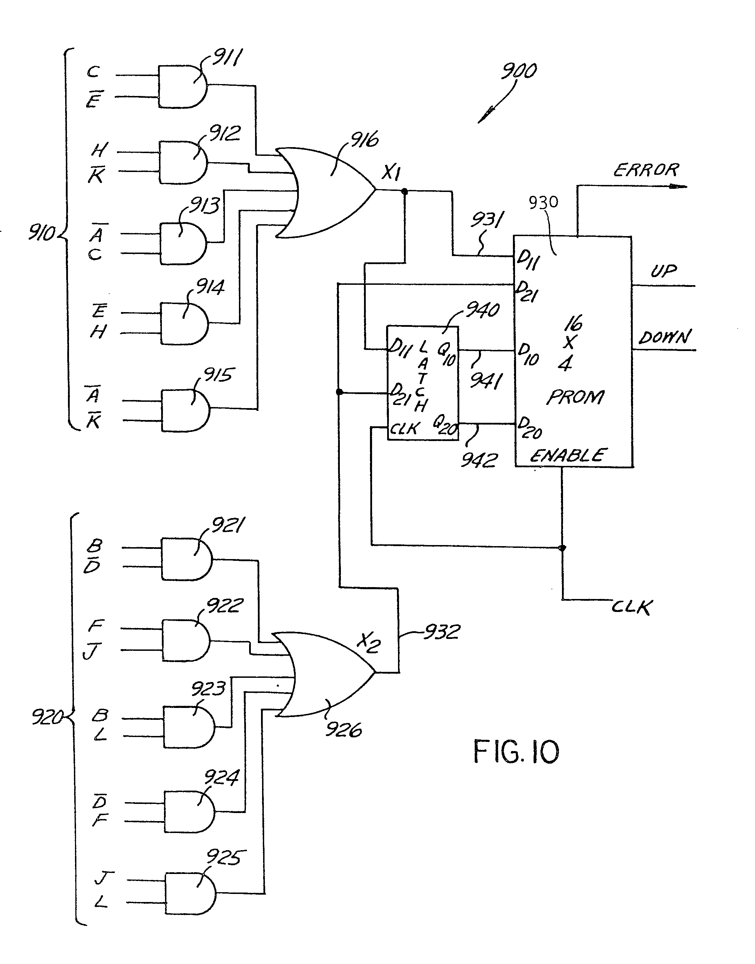

FIGURES 8-10 show a divide-by-twenty system otherwise similar to that shown in FIGURES 6 and 7. FIGURE 8 shows a pulse train scheme and a digital code assignment for such a system. FIGURE 9 shows a ROM storage scheme for such a system. FIGURE 10 shows a logic diagram 900 for translating the pulses into a ROM address.

The logic diagram 900 includes two sets 910,920 of five two-input AND gates, each driving a five-input OR gate. The first set 910 includes AND gates 911,912,913,914,915 with the output of each AND gate serving as an input to an OR gate 916. Each AND gate performs a logic "AND" function on two of the pulse trains of FIGURE 8, with some of the inputs being inverted or negated. For example, AND gate 911 provides a logic AND of pulse train C and the negated pulse train E.

The OR gate 916 has inputs from the AND gates 911, 912,913,914 and 915 and executes an OR function to provide one input to a ROM 930 on a line 931 (indicating a present value D11 as part of the ROM address and to a dual D flip-flop 940 on a line 941 (to provide a past value on a Q output Q10 of the dual D flip-flop (or latch) 940 in the next period e.g., a D10 part to the ROM address).

Similarly, the set 920 of AND gates 921,922,923, 924,925 uses different inputs and have outputs coupled to an OR gate 926 to provide a second digit D21 of the ROM address. The dual D flip-flop 940 also provides a delay to generate a D20 input to the address of the ROM.

Of course, other binary bit codes would lead to different logic assignments, but the design of such systems would be similar to that disclosed in the present application.

Various modifications and changes may be introduced without departing from the spirit and scope of the invention. For example, a different divisor or digital code could be used to advantage. The input measurement signal need not be Moire fringe type nor even optical. Further, other forms of memory besides a ROM could be used, e.g., a digital computer, a PROM or a RAM. Other types of flip-flops could be used to advantage.
The digital code might be expanded beyond two digits to provide additional information such as error or transition of
more than one count in a single clock signal.

Claims:

1. A method of producing displacement-indicative signals in a measuring machine having a movable probe, characterized in that it comprises the steps of storing in a memory a table including input addresses and output displacement indicative of the stored values corresponding to each input address, sensing position of the probe at a first time and a second time and generating a binary code indicative of the position at each time; combining the binary codes indicative of the position at the first and second times into a digital address; and using the digital address as an input address to the memory and reading the stored value corresponding to the digital address as displacement-indicative signal.

2. A measuring machine comprising: a base including a fixed grating (110); a movable member (120) coupled to a movable grating (122) positioned adjacent to the fixed grating (110); at least first and second photodetectors (124,126), each positioned adjacent to the gratings (110,122) for sensing relative movement of the gratings (110,122) and each producing a signal indicative of a displacement of a predetermined magnitude of said movable grating (122); characterized in that there is provided means (410,420,430) adapted to divide said predetermined magnitude into smaller regions and to produce signals for counting such regions, said means comprising: a memory (430) including a stored value at each of a plurality of digital addresses; a logic (410,420) coupled to the first and second photodetectors (124,126) and to the memory (430) for generating a binary word based upon present and past conditions of the first and second photodetectors (124,126); and means (up and down lines) coupled to the memory (430) for obtaining a signal based upon a stored value in the memory (430) at an address corresponding to the binary word generated by the logic (410,420), said signal being indicative of movement through a predetermined smaller region.

3. A measuring machine as claimed in claim 2, characterized in that the logic (410,420) includes devices (410, 420) for generating an address signal based upon the present state of the photodetectors (124,126) and an immediately preceding state of said photodetectors (124,126).

4. A measuring machine as claimed in claim 3, characterized in that said devices (410,420) includes D type flip-flops (410,420) having stored values of the present and immediate past output values of the photodetectors (124, 126).

5. A measuring machine as claimed in claim 2, characterized in that the first and second photodetectors (124, 126) are spaced from each other by a distance equal to an integral number of repeating measurement patterns plus one quarter of a measurement pattern.

6. A measuring machine as claimed in claim 2, characterized in that the stored values at each address comprise first and second binary bits, with the first bit indicative of a measurement count in the positive direction and the second bit indicative of a measurement count in the negative direction.

FIG. 1

FIG. 2

FIG. 3

## FIG. 4

## FIG. 5

| ADDRESS | | | | STORED VALUE | |
|---|---|---|---|---|---|
| $Q_{11}$ | $Q_{21}$ | $Q_{10}$ | $Q_{20}$ | UP | DOWN |
| 0 | 0 | 0 | 0 | 0 | 0 |
| 0 | 0 | 0 | 1 | 1 | 0 |
| 0 | 0 | 1 | 0 | 0 | 1 |
| 0 | 0 | 1 | 1 | 0 | 0 |
| 0 | 1 | 0 | 0 | 0 | 1 |
| 0 | 1 | 0 | 1 | 0 | 0 |
| 0 | 1 | 1 | 0 | 0 | 0 |
| 0 | 1 | 1 | 1 | 1 | 0 |
| 1 | 0 | 0 | 0 | 1 | 0 |
| 1 | 0 | 0 | 1 | 0 | 0 |
| 1 | 0 | 1 | 0 | 0 | 0 |
| 1 | 0 | 1 | 1 | 0 | 1 |
| 1 | 1 | 0 | 0 | 0 | 0 |
| 1 | 1 | 0 | 1 | 0 | 1 |
| 1 | 1 | 1 | 0 | 1 | 0 |
| 1 | 1 | 1 | 1 | 0 | 0 |

## FIG.6

600

610  11   00   01   11   10   00   01   11   10   01   11   00

| PRESENT STATE | PREVIOUS STATE | UP | DOWN |
|---|---|---|---|
| 0 0 | 0 0 | 0 | 0 |
| 0 1 | 0 0 | 1 | 0 |
| 1 1 | 0 0 | 0 | 1 |
| 1 0 | 0 0 | 0 | 1 |
| 0 0 | 0 1 | 0 | 1 |
| 0 1 | 0 1 | 0 | 0 |
| 1 1 | 0 1 | 1 | 0 |
| 1 0 | 0 1 | 0 | 1 |
| 0 0 | 1 1 | 1 | 0 |
| 0 1 | 1 1 | 0 | 1 |
| 1 1 | 1 1 | 0 | 0 |
| 1 0 | 1 1 | 1 | 0 |
| 0 0 | 1 0 | 1 | 0 |
| 0 1 | 1 0 | 1 | 0 |
| 1 1 | 1 0 | 0 | 1 |
| 1 0 | 1 0 | 0 | 0 |

710 — ROM ADDRESS
720 — STORED VALUES

## FIG.7

÷20

FIG.8

## ROM ADDRESS

| PRESENT STATE | PREVIOUS STATE | UP | DOWN | ERROR |
|---|---|---|---|---|
| 0 0 | 0 0 | 0 | 0 | 0 |
| 0 1 | 0 0 | 1 | 0 | 0 |
| 1 1 | 0 0 | 0 | 0 | 1 |
| 1 0 | 0 0 | 0 | 1 | 0 |
| 0 0 | 0 1 | 0 | 1 | 0 |
| 0 1 | 0 1 | 0 | 0 | 0 |
| 1 1 | 0 1 | 1 | 0 | 0 |
| 1 0 | 0 1 | 0 | 0 | 1 |
| 0 0 | 1 1 | 0 | 0 | 1 |
| 0 1 | 1 1 | 0 | 1 | 0 |
| 1 1 | 1 1 | 0 | 0 | 0 |
| 1 0 | 1 1 | 1 | 0 | 0 |
| 0 0 | 1 0 | 1 | 0 | 0 |
| 0 1 | 1 0 | 0 | 0 | 1 |
| 1 1 | 1 0 | 0 | 1 | 0 |
| 1 0 | 1 0 | 0 | 0 | 0 |

FIG.9

0024969

FIG. 10

# EUROPEAN SEARCH REPORT

European Patent Office

Application number

EP 80 40 1146

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| X | US - A - 4 079 251 (OSANN, JR.) <br> * Column 11, line 38 - column 12, line 6; figures 15,16,18 * <br><br> -- <br><br> FR - A - 2 329 021 (HEIDENHAIN GmbH) <br> * Page 3, lines 20-29; figures 1,2 * <br><br> -- <br><br> DE - A - 2 656 982 (FOKKER GmbH) <br> * Page 4, line 13 - page 5, line 16; figures 2-4 * <br><br> -- | 1-6 <br><br><br><br> 1,2,5 <br><br><br><br><br> 1,2,5, 6 | G 01 P 13/04 <br> G 01 D 5/245 <br> 5/36 |
| A,D | US - A - 3 713 139 (N.R. SANFORD) <br> * Column 1, lines 38-45; figures 1A,1B,2 * <br><br> -- <br><br> DE - A - 2 160 247 (ASE) <br> * Page 4, line 3 - page 6, line 15; figure 1 * <br><br> ---- | 2 <br><br><br><br> 1,3-6 | TECHNICAL FIELDS SEARCHED (Int. Cl.³) <br><br> G 01 D 5/245 <br> 5/247 <br> 5/249 <br> 5/36 <br> 5/38 <br> G 05 B 19/20 <br> G 01 P 13/04 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

The present search report has been drawn up for all claims

| Place of search | Date of completion of the search | Examiner |
|---|---|---|
| The Hague | 28-10-1980 | HANSEN |

EPO Form 1503.1 06.78